# EUROPÄISCHE PATENTSCHRIFT

(11) **EP 1 389 620 B1**
(45) Veröffentlichungstag und Bekanntmachung des Hinweises auf die Patenterteilung: **31.12.2008**
(21) Anmeldenummer: 02017845.5
(22) Anmeldetag: 08.08.2002
(51) Int. Cl.: C07F 7/22

(54) **Verfahren zur Herstellung und Verwendung von Mono- und Dialkylzinnhalogeniden**
Process for the preparation of mono- and dialkyltin halogen compounds and use thereof
Procédé de préparation des composés haloétain mono- et dialkylés et leur utilisation

(43) Veröffentlichungstag der Anmeldung: 18.02.2004
(73) Patentinhaber: Chemtura Organometallics GmbH, 59180 Bergkamen (DE)
(72) Erfinder: Schumacher, Oliver, Dr., 59368 Werne (DE); Franke, Liane, 45711 Datteln (DE)
(74) Vertreter: Spott, Gottfried

(56) Entgegenhaltungen:
- DE-A- 2 304 617
- GB-A- 1 501 673
- GB-A- 2 055 376

## Beschreibung

Gemische von Monoalkylzinntrichloriden RSnCl₃ und Dialkylzinndichloriden R₂SnCl₂ haben große technische Bedeutung als Rohstoffe zur Herstellung von Katalysatoren und Hitzestabilisatoren für Polymere auf Basis von Organozinnmerkaptiden, Organozinncarboxylaten, und Organozinnoxiden.

Technische Bedeutung haben insbesondere Methylzinnverbindungen, Butylzinnverbindungen und Octylzinnverbindungen. Darüber hinaus sind in zahlreichen Ländern auch Dodecylzinnverbindungen zur Verwendung als PVC- Hitzestabilisatoren in indirektem Lebensmittelkontakt zugelassen. Als PVC-Hitzestabilisatoren werden nur selten die reinen Mono- oder Dialkylzinnverbindungen verwendet, sondern vorteilhaft zumeist Gemische aus Mono- und Dialkylzinnverbindungen, welche sich in ihrer Wirkung synergistisch gegenseitig ergänzen und unterstützen. Das optimale Verhältnis von Mono- zu Dialkylzinnverbindung richtet sich dabei nach der jeweilige PVC-Type und -Formulierung, Verarbeitungsart und Anforderungsprofil, sowie der Formulierung des PVC-Stabilisators.

Als Katalysatoren finden beispielsweise Gemische von Monoalkylzinnoxiden und Dialkylzinnoxiden bei der Herstellung von Polyestern Anwendung.

Nur im Falle der Methylzinnverbindungen sind Gemische von Monoalkylzinntrichloriden und Dialkylzinndichloriden auf direktem Wege in einem Schritt zugänglich.

Im Falle der höheren Alkylzinnverbindungen (mit Alkylgruppen CₙH₂ₙ₊₁ mit n = 4 oder länger) erfolgt die Herstellung der Gemische von Monoalkylzinntrichloriden und Dialkylzinndichloriden in mehrstufigen Verfahren.

Nach dem Stand der Technik werden in einem ersten Schritt Tetraalkylzinnverbindungen R₄Sn und/oder Trialkylzinnchloride R₃SnCl durch Alkylierung von Zinntetrachlorid hergestellt. Als Alkylierungsmittel kommen dabei entweder magnesiumorganische Verbindungen, RMgCl, oder besonders ökonomisch aluminiumorganische Verbindungen, AlR₃, zum Einsatz.

Im einem zweiten Schritt erfolgt dann die Herstellung der Gemische von Monoalkylzinntrichloriden und Dialkylzinndichloriden durch eine sogenannte Komproportionierungsreaktion der Tetraalkylzinnverbindungen R₄Sn und/oder der Trialkylzinnchloride R₃SnCl mit weiterem Zinntetrachlorid (vgl. DE 1 161 893).

Im Falle längerkettiger Alkylzinnverbindungen (mit Alkylgruppen CₙH₂ₙ₊₁ mit n = 4 oder länger) sind mittels dieser Komproportionierungsreaktion Gemische mit verschiedenen Verhältnissen von Monoalkylzinntrichloriden und Dialkylzinndichloriden herstellbar. Bei Einsatz von Trialkylzinnchloriden sind so Gehalte von maximal 50 Mol % Monoalkylzinntrichlorid erreichbar, bei Einsatz von Tetraalkylzinnverbindungen Gehalte von maximal 67 Mol % Monoalkylzinntrichlorid.

Gemische von Monoalkylzinntrichloriden und Dialkylzinndichloriden mit Monoalkylzinntrichlorid-Gehalten von mehr als 67 Mol% sind so nicht realisierbar.

Prinzipiell kann man solche Gemische herstellen, indem man Gemische mit geringeren Monoalkylzinntrichlorid-Gehalten auftrennt, beispielsweise destillativ. Dieser Vorgehensweise sind dadurch Grenzen gesetzt, dass die Siedepunkte der Alkylzinnchloride mit steigender Kettenlänge und Anzahl der Alkylgruppen stark ansteigen, und bereits ab ca. 200°C die thermische Zersetzung der Alkylzinnchloride als Nebenreaktion an Bedeutung gewinnt.

Im Falle noch langkettigerer Alkylzinnverbindungen (mit Alkylgruppen CₙH₂ₙ₊₁ mit n = 8 oder länger) sind solche Destillationen nicht mehr wirtschaftlich durchführbar.

Von besonderer Wichtigkeit für die Verwendbarkeit der Gemische von Monoalkylzinntrichloriden und Dialkylzinndichloriden zur Herstellung von PVC-Hitzestabilisatoren ist ein möglichst geringer Gehalt an Zinntetrachlorid, Trialkylzinnverbindungen und Tetraalkylzinnverbindungen.

Trialkylzinnverbindungen haben den Nachteil im Allgemeinen deutlich toxischer zu sein als Mono- und Dialkylzinnverbindungen und sind deshalb unerwünscht. Tri- und Tetraalkylzinnverbindungen haben keine Wirksamkeit in der Hitzestabilisierung von PVC. Zinntetrachlorid bildet bei der Herstellung von PVC-Hitzestabilisatoren anorganische Zinnverbindungen, welche unwirksam in der Hitzestabilisierung von PVC sind, und darüber hinaus die Wirksamkeit der Stabilisatoren sogar beeinträchtigen können.

GB 1501673 (= DE 2 444 786) lehrt, dass Monoalkylzinntrichloride RSnCl₃ auch auf direktem Wege herstellbar sind durch Monoalkylierung von Zinntetrachlorid unter Verwendung stöchiometrischer Mengen von Alkylaluminiumverbindungen in Form ihrer Donorkomplexe mit Ethern oder tertiären Aminen bei milden Temperaturen.

GB 1501673 (comparison example 3) lehrt außerdem, dass die Herstellung von Dialkylzinnverbindungen auf analogem Wege nicht gelingt. Beim Versuch durch Verdopplung der Menge des Alkylaluminium-Donorkomplexes die Bildung reiner Dialkylzinnverbindungen zu erzwingen, resultiert statt dessen ein Produktgemisch aus Monoalkylzinntrichlorid RSnCl_{3,} Dialkylzinndichlorid R₂SnCl₂, Trialkylzinnchlorid R₃SnCl, und Tetraalkylzinn R₄Sn.

GB 1501673 lehrt ferner, dass bei Verwendung von Ethern als Komplexbildner nur die zur Bildung des Alkylaluminium-Donorkomplexes benötigte stöchiometrische Ethermenge notwendig ist, und dass darüber eine Erhöhung der Ethermenge keine Auswirkungen auf die Zusammensetzung des Produktgemisches hat, sondern lediglich die Aufarbeitung des Reaktionsansatzes (Phasentrennung, Extraktion) erleichtert.

GB 1501673 behauptet ferner, Gemische von Monoalkylzinntrichloriden und Dialkylzinndichloriden seien auf direktem Wege herstellbar durch Alkylierung von Zinntetrachlorid unter Verwendung stöchiometrischer Mengen von Alkylaluminiumverbindungen in Form ihrer Donorkomplexe mit Ethern bei erhöhter Temperatur. Betrachtung der Einsatzstöchiometrie und der Produktzusammensetzung in "example 19" zeigt allerdings, dass dabei nur ein Teil der eingesetzten Reaktanden reagiert haben kann. Die angegebene, ausschließlich gaschromatographische Untersuchung des Produktes ließ in diesem Fall Verluste beim eingesetzten SnCl₄ unberücksichtigt; daher muss die Ausbeute bezogen auf das eingesetzte Zinn wesentlich geringer gewesen sein als dort angegeben.

Aufgabe der vorliegenden Erfindung war es, ein Verfahren zur Herstellung von Gemischen von Monoalkylzinntrichloriden und Dialkylzinndichloriden mit hohen Monoalkylzinntrichlorid-Gehalten zu finden, insbesondere für langkettige Alkylzinnverbindungen (mit Alkylgruppen CₙH₂ₙ₊₁ mit n = 8 oder länger).

Eine weitere Aufgabe war es, einstufige Verfahren zu finden, welche die ökonomischen Nachteile der mehrstufigen Verfahrensweise nach dem Stand der Technik nicht aufweist.

Aufgabe war es weiterhin, Verfahren zu finden, welche insbesondere die Herstellung von Gemischen von Monoalkylzinntrichloriden und Dialkylzinndichloriden mit geringen Gehalten an Trialkylzinnchloriden und Zinntetrachlorid ermöglichen.

Überraschenderweise wurde gefunden, dass die direkte Herstellung von Gemischen von Monoalkylzinntrichloriden RSnCl₃ und Dialkylzinndichloriden R₂SnCl₂ in einem Reaktionsschritt durch eine Teilalkylierung von Zinntetrachlorid unter Verwendung von Alkylaluminiumverbindungen in Form ihrer Ether-Donorkomplexe möglich ist, wenn mit einer größeren Ethermenge als zur stöchiometrischen Bildung des Donorkomplexes erforderlich ist, umgesetzt wird.

Durch geeignete Wahl der Reaktanden-Verhältnisse und Reaktionsführung lassen sich erfindungsgemäß Gemische in einem direkten Verfahren mit Monoalkylzinntrichlorid-Gehalten von 45 Mol% bis über 99 Mol% in einer Stufe herstellen.

In einer bevorzugten Ausführungsvariante des erfindungsgemäßen Verfahrens wird der molare Überschuss der Ethermenge so gewählt, dass der Überschuss dabei wenigstens 10 Mol% gegenüber dem stöchiometrischen Verhältnis zwischen Trialkylaluminiumverbindung und dem Donor-Ether beträgt .

Weiterhin bevorzugt wird das Verfahren im Temperaturbereich zwischen 40 und 70°C ausgeführt.

Weiterhin bevorzugt wird als Donor oder Komplexbildner Di-n-butylether eingesetzt.

Weiterhin beschreibt die vorliegende Anmeldung Gemische von Monoalkylzinntrichloriden RSnCl₃ und Dialkylzinndichloriden R₂SnCl₂, erhältlich nach einem der vorbeschriebenen Verfahren bei der die Verfahrensausbeute wenigstens 90 Mol%, insbesondere aber wenigstens 95 Mol% bezogen auf die Menge eingesetzten Zinntetrachlorids beträgt.

Als bevorzugte Gemische werden Gemische von Monoalkylzinntrichloriden RSnCl₃ und Dialkylzinndichloriden R₂SnCl₂ mit Monoalkylzinntrichlorid-Gehalten von wenigstens 50 Mol%, insbesondere aber wenigstens 65 Mol% beschrieben.

Die Gemische sind weiterhin dadurch gekennzeichnet, dass die Alkylzinnchloride Alkylgruppen CₙH₂ₙ₊₁ mit n = 8 bis 18, insbesondere n=10 bis 18 tragen.

Die Gemische aus Monoalkylzinntrichloriden RSnCl₃ und Dialkylzinndichloriden R₂SnCl₂ sind auch gekennzeichnet durch einen Gehalt an Trialkylzinnchloriden von bis zu 5 Mol%, und einen Gehalt von weniger als 5 Mol% an Zinntetrachlorid.

Weiterhin werden Gemische aus Monoalkylzinntrichloriden RSnCl₃ und Dialkylzinndichloriden R₂SnCl₂ mit einem Gehalt von wenigstens 50 Mol% Monoalkylzinntrichlorid, wenigstens 20 Mol% Dialkylzinndichlorid und bis zu 5 Mol% Trialkylzinnchlorid beschrieben.

Besonders bevorzugt ist die Verwendung der hergestellten Gemische von Monoalkylzinntrichloriden und Dialkylzinndichloriden zur Herstellung von Gemischen von Monoalkylzinntris(merkaptiden) und Dialkylzinnbis(merkaptiden):

RSnCl₃ + 3 R'SH + 3 NaOH -> RSn(SR')₃ + 3 NaCl + 3 H₂O

R₂SnCl₂ + 2 R'SH + 2 NaOH -> R₂Sn(SR')₂ + 2 NaCl + 2 H₂O.

Diese Monoalkylzinntris(merkaptide) und Dialkylzinnbis(merkaptide) finden Verwendung als PVC-Hitzestabilisatoren sowie als Polyurethan-Katalysatoren.

### Beispiele

Die folgenden Beispiele erläutern die Erfindung, ohne sie jedoch zu beschränken. Teile- und Prozentangaben beziehen sich, wenn nicht anders lautend angegeben, auf das Gewicht.

### Beispiel 1 (erfindungsgemäß)

Es wird zunächst ein Gemisch bereitet aus 65,1 g Di-n-butylether (0,5 Mol) und 270,7 g Tridodecylaluminium (technische Qualität mit einem Gehalt von 89% (C₁₂H₂₅)₃Al, entsprechend 0,447 Mol, Verunreinigung hauptsächlich bedingt durch Kohlenwasserstoffe).

260,5 g (1 Mol) SnCl₄ werden in einem 1-I Dreihalskolben mit Rührer, Claisenaufsatz, Thermometer, Rückflusskühler und Tropftrichter vorgelegt, und unter Rühren und Kühlen bei 50°C das obige Gemisch zugegeben. Man lässt nach beendeter Zugabe noch 30 Minuten lang bei 50°C rühren. Nach Abkühlen auf Raumtemperatur wird das Reaktionsgemisch unter Kühlung in eine Mischung aus 117 g Di-n-butylether (0,9 Mol) und 180 g Wasser gegeben.

Die Phasen werden getrennt und die wässrige Phase verworfen. Aus der organischen Phase destilliert man bei 20 mbar und max. 120°C den Din-butylether ab und erhält ein Gemisch, vorwiegend bestehend aus Monododecylzinntrichlorid und Didodecylzinndichlorid.

Die gaschromatographische Untersuchung einer mit Ethylmagnesiumchlorid derivatisierten Probe ergab folgende Produktzusammensetzung:

| | |
|---|---|
| (C₁₂H₂₅)SnCl₃ | 63,3 Mol%, |
| (C₁₂H₂₅)₂SnCl₂ | 21,8Mol%, |
| (C₁₂H₂₅)₃SnCl | 3,3 Mol%, |
| Kohlenwasserstoffe | 11,6 Mol%. |

Die elementaranalytische Untersuchung ergab einen Gehalt von 24,5% Sn, und 19,7% Cl.

Die Ausbeute beträgt 459g (95,3% bezogen auf die eingesetzte Menge Zinntetrachlorid).

### Beispiel 2 (erfindungsgemäß)

Es wird zunächst ein Gemisch bereitet aus 64,3 g Di-n-butylether (0,5 Mol) und 272,5 g Tridodecylaluminium (technische Qualität mit einem Gehalt von 89% (C₁₂H₂₅)₃Al, entsprechend 0,45 Mol, Verunreinigung hauptsächlich bedingt durch Kohlenwasserstoffe).

260,5 g (1 Mol) SnCl₄ werden in einem 1-I Dreihalskolben mit Rührer, Claisenaufsatz, Thermometer, Rückflusskühler und Tropftrichter vorgelegt, und unter Rühren und Kühlen bei 50°C das obige Gemisch zugegeben. Man lässt nach beendeter Zugabe noch etwa 30 Minuten bei 50°C rühren und tropft dann ebenfalls unter Rühren 117 g Di-n-butylether (0,9 Mol) zu. Man lässt nun nach Beendigung dieser Zugabe weitere 15 Minuten ohne Heizung weiterrühren. Anschließend gibt man die Reaktionsmischung unter Kühlung in 180 ml Eiswasser. Dabei hält man die Temperatur bei höchstens 50-70°C.

Die Phasen werden getrennt und die wässrige Phase verworfen. Aus der organischen Phase destilliert man bei 20 mbar und max. 120°C den Din-butylether ab und erhält ein Gemisch, vorwiegend bestehend aus Monododecylzinntrichlorid und Didodecylzinndichlorid.

Die gaschromatographische Untersuchung einer mit Ethylmagnesiumchlorid derivatisierten Probe ergab folgende Produktzusammensetzung:

| | |
|---|---|
| (C₁₂H₂₅)SnCl₃ | 62,1Mol%, |
| (C₁₂H₂₅)₂SnCl₂ | 23,3 Mol%, |
| (C₁₂H₂₅)₃SnCl | 2,9 Mol%, |
| Kohlenwasserstoffe | 11,7 Mol%. |

Die elementaranalytische Untersuchung ergab einen Gehalt von 24,6% Sn, und 19,6% Cl.

Die Ausbeute beträgt 463 g (95,8 % bezogen auf die eingesetzte Menge Zinntetrachlorid).

### Beispiel 3 (erfindungsgemäß)

Es wird zunächst ein Gemisch bereitet aus 174 g Di-n-butylether (1,34 Mol) und 272,5 g Tridodecylaluminium (technische Qualität mit einem Gehalt von 89% (C₁₂H₂₅)₃Al, entsprechend 0,45 Mol, Verunreinigung hauptsächlich bedingt durch Kohlenwasserstoffe).

260,5 g (1 Mol) SnCl₄ werden in einem 1-I Dreihalskolben mit Rührer, Claisenaufsatz, Thermometer, Rückflusskühler und Tropftrichter vorgelegt, und unter Rühren und Kühlen bei 50°C das obige Gemisch zugegeben. Man lässt nach beendeter Zugabe noch 45 Minuten lang bei 50°C rühren. Nach Abkühlen auf Raumtemperatur wird das Reaktionsgemisch unter Kühlung in 140 g Wasser gegeben.

Die Phasen werden getrennt und die wässrige Phase verworfen. Aus der organischen Phase destilliert man bei 20 mbar und max. 120°C den Din-butylether ab und erhält ein Gemisch, vorwiegend bestehend aus Monododecylzinntrichlorid und Didodecylzinndichlorid.

Die gaschromatographische Untersuchung einer mit Ethylmagnesiumchlorid derivatisierten Probe ergab folgende Produktzusammensetzung:

| | |
|---|---|
| (C₁₂H₂₅)SnCl₃ | 63,7 Mol%, |
| (C₁₂H₂₅)₂SnCl₂ | 25,7 Mol%, |
| (C₁₂H₂₅)₃SnCl | 0,6 Mol%, |
| Kohlenwasserstoffe | 10,0 Mol%. |

Die elementaranalytische Untersuchung ergab einen Gehalt von 25,15% Sn, und 20,3% Cl.

Die Ausbeute beträgt 456,4 g (96,7 % bezogen auf die eingesetzte Menge Zinntetrachlorid).

### Beispiel 4 (erfindungsgemäß)

Es wird zunächst ein Gemisch bereitet aus 174 g Di-n-butylether (1,34 Mol) und 165 g Trioctylaluminium (entsprechend 0,45 Mol).

260,5 g (1 Mol) SnCl₄ werden in einem 1-I Dreihalskolben mit Rührer, Claisenaufsatz, Thermometer, Rückflusskühler und Tropftrichter vorgelegt, und unter Rühren und Kühlen bei 50°C das obige Gemisch zugegeben. Man lässt nach beendeter Zugabe noch 45 Minuten lang bei 50°C rühren. Nach Abkühlen auf Raumtemperatur wird das Reaktionsgemisch unter Kühlung in 140 g Wasser gegeben.

Die Phasen werden getrennt und die wässrige Phase verworfen. Aus der organischen Phase destilliert man bei 20 mbar und max. 120°C den Din-butylether ab und erhält ein Gemisch, vorwiegend bestehend aus Monooctylzinntrichlorid und Dioctylzinndichlorid.

Die gaschromatographische Untersuchung einer mit Ethylmagnesiumchlorid derivatisierten Probe ergab folgende Produktzusammensetzung:

| | |
|---|---|
| (C₈H₁₇)SnCl₃ | 66,3 Mol%, |
| (C₈H₁₇)₂SnCl₂ | 32,0 Mol%, |
| (C₈H₁₇)₃SnCl | 0,4 Mol%, |
| Kohlenwasserstoffe | 1,3 Mol%. |

Die elementaranalytische Untersuchung ergab einen Gehalt von 32,3% Sn, und 25,8% Cl.

Die Ausbeute beträgt 360,2 g (98,1 % bezogen auf die eingesetzte Menge Zinntetrachlorid).

Die wässrige Phase wurde mittels AAS (Atomabsorbtionsspektroskopie) untersucht. Sie enthielt 0,13 g Zinn, entsprechend 0,29 g SnCl₄ oder ca. 0,11% der eingesetzten Zinnmenge.

### Beispiel 5 (erfindungsgemäß)

Es wird zunächst ein Gemisch bereitet aus 174 g Di-n-butylether (1,34 Mol) und 354,4 g Trioctadecylaluminium (entsprechend 0,45 Mol).

260,5 g (1 Mol) SnCl₄ werden in einem 1-I Dreihalskolben mit Rührer, Claisenaufsatz, Thermometer, Rückflusskühler und Tropftrichter vorgelegt, und unter Rühren und Kühlen bei 50°C das obige Gemisch zugegeben. Man lässt nach beendeter Zugabe noch 45 Minuten lang bei 50°C rühren. Nach Abkühlen auf Raumtemperatur wird das Reaktionsgemisch unter Kühlung in 140 g Wasser gegeben.

Die Phasen werden getrennt und die wässrige Phase verworfen. Aus der organischen Phase destilliert man bei 20 mbar und max. 120°C den Din-butylether ab und erhält ein Gemisch, vorwiegend bestehend aus Monooctadecylzinntrichlorid und Dioctadecylzinndichlorid.

Die gaschromatographische Untersuchung einer mit Ethylmagnesiumchlorid derivatisierten Probe ergab folgende Produktzusammensetzung:

| | |
|---|---|
| (C₁₈H₃₇)SnCl₃ | 67,7 Mol%, |
| (C₁₈H₃₇)₂SnCl₂ | 30,5 Mol%, |
| (C₁₈H₃₇)₃SnCl | 0,5 Mol%, |
| Kohlenwasserstoffe | 1,3 Mol%. |

Die elementaranalytische Untersuchung ergab einen Gehalt von 21,4% Sn, und 17,1% Cl.

Die Ausbeute beträgt 528,6 g (95,3 % bezogen auf die eingesetzte Menge Zinntetrachlorid).

### Beispiel 6 (erfindungsgemäß)

Das erfindungsgemäße Beispiel 4 wurde wiederholt mit der Änderung, dass anstelle von Di-n-butylether andere Ether verwendet wurden.

Versuchsdurchführung, Ausbeuten und Produktzusammensetzungen sind in Tabelle 1 zusammengefasst.

### Beispiel 7 (erfindungsgemäß)

Das erfindungsgemäße Beispiel 4 wurde wiederholt mit der Änderung, dass bei höheren Temperaturen gearbeitet wurde.

Versuchsdurchführung, Ausbeuten und Produktzusammensetzungen sind in Tabelle 2 zusammengefasst.

### Beispiel 8 (erfindungsgemäß)

Das erfindungsgemäße Beispiel 4 wurde wiederholt mit der Änderung, dass die Reaktanten-Verhältnisse SnCl₄ / Tri-n-octylaluminium / Di-n-butylether variiert wurden.

Versuchsdurchführung, Ausbeuten und Produktzusammensetzungen sind in Tabelle 3 zusammengefasst.

**Tabelle 1**

| **Beispiel** | **Ether** | **maximaleTemperatur** | **Produkt Ausbeute** | **Produkt Zusammensetzung** | | | | | |
|---|---|---|---|---|---|---|---|---|---|
| | | **[°C]** | **[g]/(% d.Theorie)** | **Sn [masse%]** | **Cl [masse%]** | **(C₈H₁₇)SnCl₃ [Mol%]** | **(C₈H₁₇)₂SnCl₂ [Mol%]** | **(C₈H₁₇)₃SnCl [Mol%]** | **Kohlen-wasserstoffe [Mol%]** |
| 6a | Diethylether | 35 | 348,6 / (93,7) | 31,9 | 24,7 | 63,1 | 31,7 | 4,6 | 0,7 |
| 6b | Methyl-tert.-Butylether | 60 | 361,3 / (98,0) | 32,2 | 25,5 | 65,0 | 32,8 | 0,6 | 1,6 |
| 6c | Tetrahydro-furan | 60 | 353,8 / (95,6) | 32,1 | 25,3 | 64,0 | 33,3 | 0,9 | 1,8 |
| 6d | Dioxan | 60 | 357,6 / (97,3) | 32,3 | 25,7 | 65,8 | 32,4 | 0,7 | 1,1 |

**Tabelle 2**

| **Beispiel** | **maximale Temperatur** | **Produkt Ausbeute** | **Produkt Zusammensetzung** | | | | | |
|---|---|---|---|---|---|---|---|---|
| | **[°C]** | **[g]/(% d. Teorie)** | **Sn [masse%]** | **Cl [Masse%]** | **(C₈H₁₇)SnCl₃ [Mol%]** | **(C₈H₁₇)SnCl₃ (C₈H₁₇)₃SnCl [Mol%]** | **[Mol%]** | **Kohlen-wasserstoffe [Mol%]** |
| 7a | 70 | 358,1/(96,8) | 32,1 | 25,3 | 64,3 | 32,7 | 1,4 | 1,6 |
| 7b | 100 | 351,1/(94,4) | 31,9 | 24,9 | 66,0 | 25,3 | 8,4 | 0,3 |

**Tabelle 3:**

| **Beispiel** | **Einsatz Tri-n-octyl-aluminium** | **Einsatz Di-n-butyl-ether** | **Produkt Ausbeute** | **Produkt Zusammensetzung** | | | | | |
|---|---|---|---|---|---|---|---|---|---|
| | **[g] / ([mol])** | **[g] / ([mol])** | **[g] / ([% d. Theorie])** | **Sn [Masse%]** | **Cl [Masse%]** | **(C₈H₁₇)SnCl₃ [Mol%]** | **(C₈H₁₇)₂SnCl₂ [Mol%]** | **(C₈H₁₇)₃SnCl [Mol%]** | **Kohlen- wasserstoffe [Mol%]** |
| 8a | 191,0 / (0,521) | 201,5 / (1,55) | 374,7 / (89,0) | 28,2 | 20,5 | 38,0 | 46,5 | 0,8 | 14,7 |
| 8b | 172,2 / (0,470) | 181,7 / (1,40) | 365,6 / (93,2) | 30,3 | 23,4 | 54,3 | 36,2 | 0,6 | 8,9 |
| 8c | 153,7 / (0,419) | 162,1 / (1,24) | 356,6 / (95,7) | 31,8 | 26,1 | 70,2 | 23,4 | 0,4 | 6,0 |
| 8d | 134,7 / (0,367) | 142,1 / (1,09) | 341,0 / (98,0) | 34,1 | 29,5 | 89,2 | 9,9 | 0,1 | 0,8 |

### Vergleichsbeispiel 1

Es wird zunächst ein Gemisch bereitet aus 58,2 g Di-n-butylether (0,45 Mol) und 270,7 g Tridodecylaluminium (technische Qualität mit einem Gehalt von 89% (C₁₂H₂₅)₃Al, entsprechend 0,447 Mol, verunreinigt durch Kohlenwasserstoffe).

260,5 g (1 Mol) SnCl₄ werden in einem 1-I Dreihalskolben mit Rührer, Claisenaufsatz, Thermometer, Rückflusskühler und Tropftrichter vorgelegt, und unter Rühren und Kühlen bei 50°C das obige Gemisch zugegeben. Man lässt nach beendeter Zugabe noch 30 Minuten lang bei 50°C rühren. Nach Abkühlen auf Raumtemperatur wird das Reaktionsgemisch unter Kühlung in eine Mischung aus 117g Di-n-butylether (0,9 Mol) und 180 g Wasser gegeben.

Die Phasen werden getrennt und die wässrige Phase verworfen. Aus der organischen Phase destilliert man bei 20 mbar und max. 120°C den Din-butylether ab und erhält ein Gemisch, vorwiegend bestehend aus Monododecylzinntrichlorid und Didodecylzinndichlorid.

Die gaschromatographische Untersuchung einer mit Ethylmagnesiumchlorid derivatisierten Probe ergab folgende Produktzusammensetzung:

| | |
|---|---|
| (C₁₂H₂₅)SnCl₃ | 69,3Mol%, |
| (C₁₂H₂₅)₂SnCl₂ | 18,5Mol%, |
| (C₁₂H₂₅)₃SnCl | 6,3 Mol%, |
| Kohlenwasserstoffe | 5,9 Mol%. |

Die elementaranalytische Untersuchung ergab einen Gehalt von 25,8 % Sn, und 20,6% Cl.

Die Ausbeute beträgt 427 g (92,9 % bezogen auf die eingesetzte Menge Zinntetrachlorid).

Wird also lediglich eine nahezu equimolare Ethermenge eingesetzt, so erhält man Produkte mit unvorteilhaft hohen Trialkylzinngehalten. Außerdem sinkt die Ausbeute im Vergleich zu den erfindungsgemäßen Beispielen.

## Patentansprüche

1. Verfahren zur direkten Herstellung von Gemischen von Monoalkylzinntrichloriden RSnCl₃ und Dialkylzinndichloriden R₂SnCl₂, **wobei R für einen Alkylrest CₙH₂ₙ₊₁ mit n gleich wenigstens 8 steht**, mit bis zu 5 Mol-% Trialkylzinnchloridgehalten und weniger als 5 Mol-% Zinntetrachlorid in einer Stufe in einem Reaktionsschritt, **wobei man** Zinntetrachlorid **mit** Alkylaluminiumverbindungen in Form ihrer Ether-Donorkomplexe **in Anwesenheit** einer größeren Ethermenge, als zur stöchiometrischen Bildung des Donorkomplexes erforderlich ist, **teilalkyliert.**

2. Verfahren nach Anspruch 1, **dadurch gekennzeichnet, dass** in einem direkten Verfahren Gemische mit Monoalkylzinntrichlorid-Gehalten von 45 Mol% bis über 99 Mol% in einer Stufe hergestellt werden.

3. Verfahren nach Anspruch 1, **dadurch gekennzeichnet, dass** der molare Überschuss der Ethermenge wenigstens 10 Mol% gegenüber dem stöchiometrischen Verhältnis zwischen Trialkylaluminiumverbindung und Donor-Ether beträgt.

4. Verfahren gemäß Anspruch 1, **dadurch gekennzeichnet, dass** die Reaktion bevorzugt in einem Temperaturbereich zwischen 40°C und 70°C ausgeführt wird.

5. Verfahren gemäß Anspruch 1, **dadurch gekennzeichnet, dass** als Donorkomplexbildner bevorzugt Di-n-butylether eingesetzt wird.

## Claims

1. Process for the direct preparation of mixtures of monoalkyl tin trichlorides RSnCl₃ and dialkyl tin dichlorides R₂SnCl₂, wherein R is an alkyl group CₙH₂ₙ₊₁ wherein n is at least 8, with up to 5 mol % trialkyl tin chloride contents and less than 5 mol % tin tetrachloride in one step in a one-pot-reaction, wherein tin tetrachloride is partially alkylated with alkyl aluminum compounds in the form of their ether donor complexes in the presence of a major amount of ether as required for a stoichiometric formation of the donor complex.

2. Process of claim 1, **characterized in that** mixtures with monoalkyl tin trichloride contents of 45 mol % up to more than 99 mol % are prepared in one step in a direct process.

3. Process of claim 1, **characterized in that** the molar excess of the amount of ether is at least 10 mol % compared to the stoichiometric ratio between trialkyl aluminum compound and donor ether.

4. Process of claim 1, **characterized in that** the reaction is preferably carried out in a temperature range between 40°C and 70 °C.

5. Process of claim 1, **characterized in that** as donor complexing agent di-n-butyl ether is preferably used.

## Revendications

1. Procédé de préparation directe en une étape de réaction de mélanges de trichlorure de monoalkylétain RSnCl₃ et de dichlorure de dialkylétain R₂SnCl₂, où R représente un groupe alkyle CₙH₂ₙ₊₁, n représentant au moins 8, avec une teneur de jusqu'à 5 % en moles de chlorure de trialkylétain et de moins de 5 % en moles de tétrachlorure de zinc, dans lequel on alkyle partiellement du tétrachlorure d'étain à l'aide de composés d'alkylaluminium qui présentent la forme de leur complexe d'éther donneur, en présence d'une quantité d'éther supérieure à celle nécessaire pour la formation stoechiométrique d'un complexe donneur.

2. Procédé selon la revendication 1, **caractérisé en ce que** l'on prépare dans un procédé direct et en une étape des mélanges dont la teneur en trichlorure de monoalkylétain est comprise entre 45 % en moles à plus de 99 % en moles.

3. Procédé selon la revendication 1, **caractérisé en ce que** l'excès molaire de la quantité d'éther par rapport au rapport stoechiométrique entre le composé de trialkylaluminium et l'éther donneur est d'au moins 10 % en moles.

4. Procédé selon la revendication 1, **caractérisé en ce que** l'on conduit la réaction de préférence dans une plage de température comprise entre 40°C et 70°C.

5. Procédé selon la revendication 1, **caractérisé en ce que** comme agent de formation de complexes donneurs, on utilise de préférence un éther de di-n-butyle.
